(19) Europäisches Patentamt
European Patent Office
Office européen des brevets

(11) **EP 4 481 349 A1**

(12) **EUROPEAN PATENT APPLICATION**

(43) Date of publication:
**25.12.2024  Bulletin 2024/52**

(21) Application number: **24180079.6**

(22) Date of filing: **05.06.2024**

(51) International Patent Classification (IPC):
**G01L 3/14** (2006.01)   **G01L 1/22** (2006.01)
**G01L 5/1627** (2020.01)

(52) Cooperative Patent Classification (CPC):
**G01L 3/1457; G01L 1/2231; G01L 5/1627**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **23.06.2023  JP 2023103637**

(71) Applicants:
• **The University of Tokyo
Bunkyo-ku, Tokyo 113-8654 (JP)**
• **Sumitomo Heavy Industries, Ltd.
Tokyo 141-6025 (JP)**

(72) Inventors:
• **OKAZAKI, Osamu
Kanagawa, 237-8555, (JP)**
• **USAMI, Yoshihisa
Tokyo, 100-0004, (JP)**
• **TAKEYA, Junichi
Tokyo 113-8654, (JP)**
• **YAMASHITA, Yu
Tokyo 113-8654, (JP)**

(74) Representative: **Louis Pöhlau Lohrentz
Patentanwälte
Postfach 30 55
90014 Nürnberg (DE)**

(54) **SENSOR DEVICE**

(57)    There is provided a sensor device (100) capable of accurately detecting information related to a load or a torque acting on a detection object with few restrictions on an installation part. The sensor device (100) detects information related to a load or a torque acting on a detection object. The sensor device (100) includes a plurality of sensor members (102) that are attached to the detection object and are connected in parallel, and an estimation unit (104) that estimates the information related to the load or the torque acting on the detection object based on detected values of the plurality of sensor members (102).

FIG. 2

EP 4 481 349 A1

**Description**

BACKGROUND OF THE INVENTION

Field of the Invention

The present invention relates to a sensor device.

Description of Related Art

Japanese Unexamined Patent Publication No. 2020-201046 discloses a sensor device that detects a torque applied to a circular body. The sensor device has a resistance wire pattern provided over the entire circumference in a circumferential direction of a circular body such as a flex gear, and has a configuration in which a plurality of sensor members are connected in series. Thus, the torque applied to the circular body can be accurately detected (estimated).

SUMMARY OF THE INVENTION

The sensor device of Japanese Unexamined Patent Publication No. 2020-201046 is suitable for detecting a torque by being installed in an output member of a speed reducer, but there is an operation pattern (for example, rotation exceeding 360 degrees or continuous rotation) that is difficult to cope with due to a restriction such as wiring, because the output member rotates. In addition, the sensor device of Japanese Unexamined Patent Publication No. 2020-201046 has a problem in that sensitivity decreases when installed in a fixation portion.
The present invention has been made in view of such circumstances, and an exemplary object of one aspect of the present invention is to provide a sensor device capable of accurately estimating information related to a load or a torque acting on a detection object with few restrictions on an installation part.
In order to solve the above-described problem, according to one aspect of the present invention, there is provided a sensor device that detects information related to a load or a torque acting on a detection object, the sensor device including a plurality of sensor members that are attached to the detection object and are connected in parallel, and an estimation unit that estimates the information related to the load or the torque acting on the detection object based on detected values of the plurality of sensor members.
Any combination of the components described above and a combination obtained by switching the components and expressions of the present invention between methods, devices, and systems are also effective as an aspect of the present invention.
According to the present invention, it is possible to provide a sensor device capable of accurately detecting information related to a load or a torque acting on a detection object with few restrictions on an installation part.

BRIEF DESCRIPTION OF THE DRAWINGS

Fig. 1 is a cross-sectional view of a gear device to which a sensor device according to an embodiment is applied.
Fig. 2 is a view of a first meshing gear and a periphery thereof in Fig. 1 as viewed in an axial direction.
Fig. 3 is a cross-sectional view taken along a line A-A of Fig. 2.
Fig. 4 is a perspective view of a handle device to which the sensor device is applied.

DETAILED DESCRIPTION OF THE INVENTION

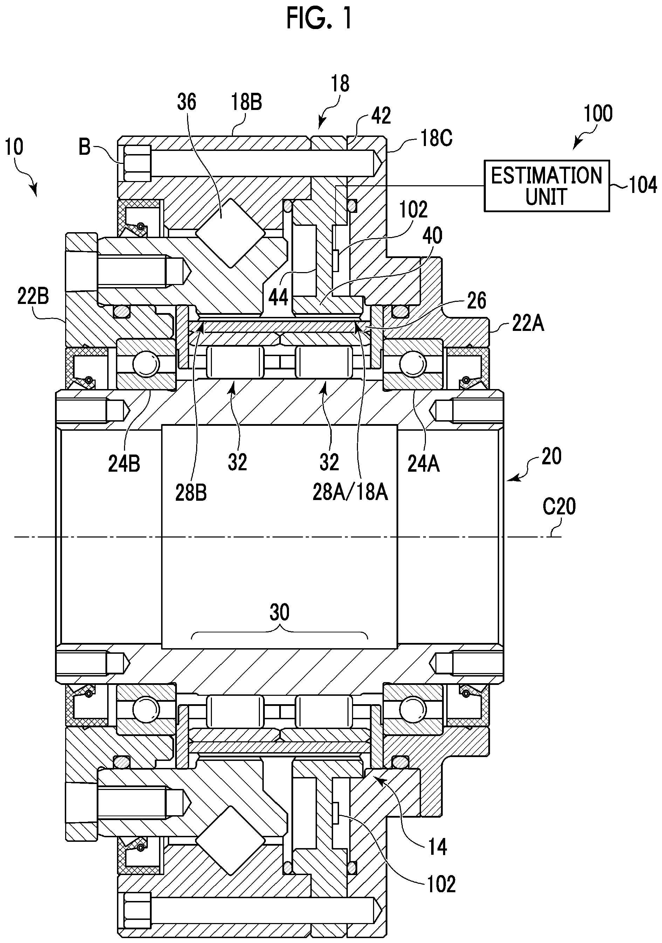

Hereinafter, the same or equivalent components, members, and processes in drawings will be denoted by the same reference numerals, and overlapping description thereof will be omitted as appropriate. In addition, dimensions of the members in each drawing are appropriately enlarged or reduced to facilitate understanding. In addition, a part of the members that are not important for describing an embodiment in each drawing is omitted.
In the embodiment, with regard to a sensor device, a case where a certain component of a gear device is a first meshing gear, and information related to a torque acting on the first meshing gear is detected will be described as an example. A detection object of the sensor device is not limited to the first meshing gear, and a device in which the detection object is incorporated is not limited to the gear device.
First, a gear device to which a sensor device according to the embodiment is applied will be described.
With reference to Fig. 1, description will be made. A bending meshing type gear device 10 (hereinafter, simply referred to as a gear device 10) is incorporated in a driven machine as a part of the driven machine. Examples of the driven machine include various machines such as industrial machines (machine tools, construction machines, and the like), robots (industrial robots, service robots, and the like), and transport equipment (conveyors, vehicles, and the like).

In the present embodiment, the bending meshing type gear device 10 of a tubular type will be described. The gear device 10 includes a wave generator 30, a bending gear 26 that is flexibly deformed by the wave generator 30, meshing gears 28A and 28B that mesh with the bending gear 26, and a wave generator bearing 32 disposed between the wave generator 30 and the bending gear 26. In addition, the gear device 10 includes a wave generator shaft 20 including the wave generator 30, bearings 24A and 24B that support the wave generator shaft 20, bearing housings 22A and 22B that support the bearings 24A and 24B, and a casing 18. Hereinafter, a direction along a rotation center line C20 of the wave generator 30 will be simply referred to as an axial direction, and a direction of a radius and a direction of a circumference with the rotation center line C20 as a center of a circle will be simply referred to as a radial direction and a circumferential direction. In addition, for convenience of description, one side in the axial direction (a right side of the page of Fig. 1) will be referred to as an input side, and the other side in the axial direction will be referred to as a counter-input side.

The gear device 10 includes an input member to which rotation is input from an external drive source, an output member that outputs rotation to an external driven member, and a fixing member that is fixed to an external fixed member. Here, an example will be described in which the wave generator shaft 20 (wave generator 30) is the input member, the second bearing housing 22B (to be described below) is the output member, and the casing 18 is the fixing member. The drive source is, for example, a motor, but may also be a gear motor, an engine, or the like. The driven member and the fixed member are, for example, a part of the driven machine.

The wave generator 30 has stiffness sufficient to flexibly deform the bending gear 26 by its own rotation. A cross-sectional shape of a facing peripheral portion (here, an outer peripheral portion) of the wave generator 30 facing the bending gear 26 in the radial direction is an elliptical shape. The cross-sectional shape here refers to a shape in a cross section perpendicular to the axial direction of the wave generator 30. Here, term "elliptical" is not limited to an ellipse in a geometrically strict sense and also includes an approximately elliptical shape.

The bending gear 26 is a tubular member having flexibility. The bending gear 26 is flexibly deformed to have an elliptical shape that matches the shape of the wave generator 30, and meshes with the meshing gears 28A and 28B at two locations in a major axis direction.

The meshing gears 28A and 28B have such stiffness that the meshing gears 28A and 28B are not flexibly deformed following rotation of the wave generator 30. The meshing gears 28A and 28B include a first meshing gear 28A that meshes with teeth of an input side portion of the bending gear 26, and a second meshing gear 28B that meshes with teeth of a counter-input side portion of the bending gear 26. The first meshing gear 28A has the number of teeth (for example, 102) different from the number of teeth (for example, 100) of the bending gear 26, and the second meshing gear 28B has the same number of teeth as the number of teeth of the bending gear 26.

One of the bending gear 26 or the meshing gears 28A and 28B is an external gear, and the other is an internal gear. Here, an example in which the bending gear 26 is an external gear and the meshing gears 28A and 28B are internal gears will be described.

The casing 18 of the present embodiment includes a first casing member 18A that also serves as the first meshing gear 28A, a second casing member 18B that is disposed radially outside the second meshing gear 28B, and a third casing member 18C that is disposed on a side opposite to the second casing member 18B with the first casing member 18A interposed therebetween. Each of the casing members 18A, 18B, and 18C is connected by a connection member B such as a bolt. The casing 18 is fixed to a fixed member outside the gear device 10. A main bearing 36 is disposed between the casing 18 and the second meshing gear 28B.

The bearings 24A and 24B include a first bearing 24A disposed on the input side and a second bearing 24B disposed on the counter-input side. Although an example in which the bearings 24A and 24B are ball bearings is shown, a specific example of the bearings 24A and 24B is not particularly limited, and various types of bearings such as a roller bearing may be used.

The bearing housings 22A and 22B include a first bearing housing 22A that supports the first bearing 24A, and a second bearing housing 22B that supports the second bearing 24B. The first bearing housing 22A is disposed on the input side in the axial direction with respect to the bending gear 26. The first bearing housing 22A is connected to the third casing member 18C by a bolt, press fitting, or the like. The second bearing housing 22B is disposed on the counter-input side in the axial direction with respect to the bending gear 26. The second bearing housing 22B is connected to the second meshing gear 28B by a bolt, press fitting, or the like.

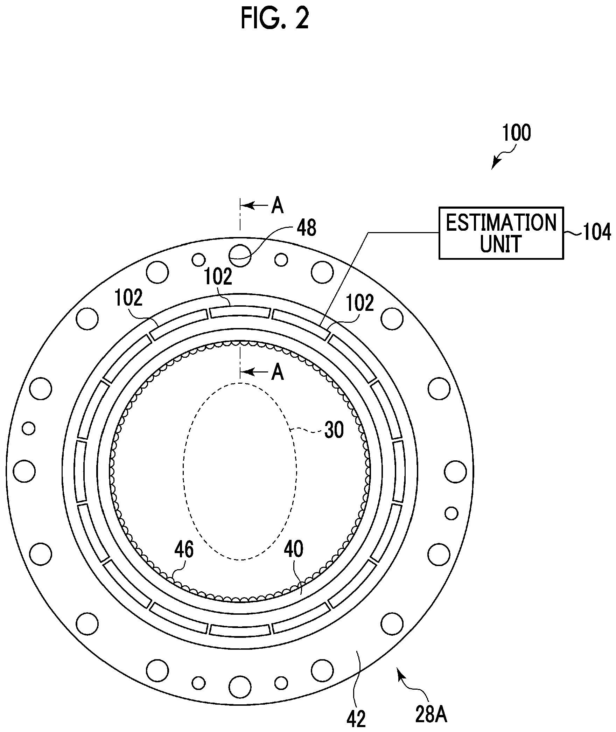

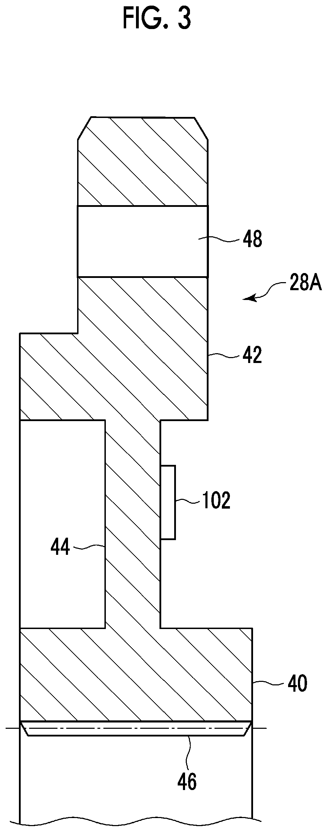

Fig. 2 is a view of the first meshing gear and a periphery thereof in Fig. 1 as viewed in the axial direction. Fig. 3 is a cross-sectional view taken along a line A-A of Fig. 2.

The first meshing gear 28A (first casing member 18A) includes an internal tooth ring portion 40, an outer ring portion 42 provided radially outside the internal tooth ring portion 40, and an easily deformable portion 44 provided between the internal tooth ring portion 40 and the outer ring portion 42.

The internal tooth ring portion 40 has a ring shape, and an internal tooth 46 that meshes with the bending gear 26 is provided on an inner periphery thereof.

The outer ring portion 42 has a ring shape and is fixed to a fixed member outside the gear device 10. The outer ring portion 42 of the present embodiment is connected to the other casing members 18B and 18C constituting the casing 18 by using a bolt B, and is fixed to the fixed member via the casing members 18B and 18C (refer to Fig. 1). In addition, the outer ring portion 42 may be directly fixed to the fixed member, or may be fixed to the fixed member via another member (for example, the first bearing housing 22A). In the outer ring portion 42 of the present embodiment, through-holes 48 through which the connection member B connected to the casing members 18B and 18C passes are formed at intervals in the circumferential direction.

The easily deformable portion 44 is connected to an outer periphery of the internal tooth ring portion 40 and is connected to an inner periphery of the outer ring portion 42. The easily deformable portion 44 is configured to be more easily deformed than the internal tooth ring portion 40 in a case where a torque is applied to the internal tooth ring portion 40 due to meshing with the bending gear 26 in a state where the outer ring portion 42 is fixed to the fixed member. In such a case, it can be said that the amount of deformation of the easily deformable portion 44 is larger than that of the internal tooth ring portion 40. Although the easily deformable portion 44 of the present embodiment has a smaller axial thickness than the outer ring portion 42, the easily deformable portion 44 may have an axial thickness equal to or greater than the axial thickness of the outer ring portion 42. In addition, although the easily deformable portion 44 of the present embodiment has a smaller axial thickness than the internal tooth ring portion 40, the easily deformable portion 44 may have an axial thickness equal to or greater than the axial thickness of the internal tooth ring portion 40. The easily deformable portion 44 of the present embodiment has a ring shape. The easily deformable portion 44 of the present embodiment has a ring shape that is continuous over the entire circumference in the circumferential direction. The easily deformable portion 44 of the present embodiment does not have a hole portion penetrating in the axial direction.

The operation of the gear device 10 described above will be described. The bending gear 26 is flexibly deformed to have an elliptical shape that matches the shape of the wave generator 30 of the wave generator shaft 20, and meshes with the meshing gears 28A and 28B at two locations in the major axis direction. When the wave generator shaft 20 rotates, a meshing position between the bending gear 26 and the meshing gears 28A and 28B moves in a rotation direction of the wave generator 30. In this case, each time the meshing position between the bending gear 26 and the first meshing gear 28A having different numbers of teeth makes one revolution, the meshing teeth of these gears gradually shift in the circumferential direction. As a result, one (in the present embodiment, the bending gear 26) of the bending gear 26 and the first meshing gear 28A rotates, and an axial rotation component thereof is taken out by the output member as output rotation. In the present embodiment, the bending gear 26 and the second meshing gear 28B synchronize with each other because of having the same number of teeth as each other, and the axial rotation component of the bending gear 26 is taken out by the second bearing housing 22B as the output member through the second meshing gear 28B that synchronizes with the bending gear 26. At this point, the output rotation that is changed in speed (here, decreased in speed) at a gear ratio corresponding to a difference in number of teeth between the bending gear 26 and the first meshing gear 28A with respect to input rotation that is input to the wave generator 30 is taken out by the output member.

Subsequently, the sensor device according to the embodiment will be described.

With reference to Figs. 1 to 3, description will be made. The sensor device 100 includes a plurality of sensor members 102 that are attached to the first meshing gear 28A serving as the detection object, and an estimation unit 104 that estimates information related to a torque acting on the first meshing gear 28A based on detected values of the plurality of sensor members 102.

The plurality of sensor members 102 are sensors for detecting the amount of distortion (in the present embodiment, the amount of distortion in which the distortion in the circumferential direction and the distortion in the radial direction are synthesized) of the easily deformable portion 44. The sensor member 102 of the present embodiment is a distortion gauge. In addition, the sensor member 102 may be, for example, a piezoelectric element. When the easily deformable portion 44 is distorted by being deformed in the circumferential direction as described above, the plurality of sensor members 102 can detect the amount of distortion. The plurality of sensor members 102 output a detected value, that is, a detection signal indicating the amount of distortion.

The plurality of sensor members 102 are preferably similarly configured. That is, the plurality of sensor members 102 are configured to have the same structure, characteristics, and performance.

The plurality of sensor members 102 are attached to the first casing member 18A that also serves as the first meshing gear 28A. That is, the plurality of sensor members 102 are attached to a fixing member that is fixed to a fixed member outside the gear device 10. Accordingly, it is possible to avoid problems with power supply of the sensor member 102 and sensor output allocation. In addition, the sensor member 102 is attached to the first meshing gear 28A having stiffness. For example, in a case where the sensor member 102 is attached to a member having flexibility and having relatively large deformation, a large load is applied to wiring of the sensor member 102, and the wiring may be broken. However, by attaching the sensor member 102 to the first meshing gear 28A having stiffness, such problems can be avoided.

The plurality of sensor members 102 are attached to a side surface 44a on the input side of the easily deformable portion 44 of the first meshing gear 28A. The plurality of sensor members 102 may be attached to a side surface 44a on the output side of the easily deformable portion 44. The plurality of sensor members 102 are disposed in a row in the circumferential direction, and are preferably disposed at equal intervals in the circumferential direction.

The plurality of sensor members 102 are wired in parallel and connected to the estimation unit 104. That is, the plurality of sensor members 102 are connected in parallel. Specifically, the plurality of sensor members 102 are each connected to the estimation unit 104, detect the amount of distortion of the easily deformable portion 44 at each position, and output the detected value to the estimation unit 104. In Fig. 3, in order to avoid complication of the drawing, a connection line between the sensor member 102 and the estimation unit 104 is not illustrated except for one sensor member 102.

The first meshing gear 28A meshes (that is, comes into contact) with the bending gear 26 at two locations, so that stress, that is, distortion is locally generated around the meshing location in the first meshing gear 28A during the operation of the gear device 10. That is, a distribution of the stress, that is, a distribution of the distortion acting on the first meshing gear 28A is not uniform. In order to more accurately estimate the torque acting on the first meshing gear 28A, it is necessary to accurately identify the distribution of the stress, that is, the distribution of the distortion, and for this purpose, it is preferable that the plurality of sensor members 102 are disposed in the circumferential direction without clearance. That is, it is preferable that the plurality of sensor members 102 are disposed to cover the entire circumference of the easily deformable portion 44.

The estimation unit 104 can be implemented by a combination of a processor (hardware) such as a central processing unit (CPU), a micro processing unit (MPU), or a microcomputer, and a software program executed by the processor (hardware). The estimation unit 104 may be a combination of a plurality of processors. Alternatively, the estimation unit 1040 may be configured only by hardware.

The estimation unit 104 may be provided inside the gear device 10, or may be provided outside the gear device 10.

The estimation unit 104 estimates the torque acting on the first meshing gear 28A serving as the detection object based on the detected values of the plurality of sensor members 102 by using any one of the following estimation methods.

(Estimation by Total Value)

The larger the torque acting on the first meshing gear 28A, the more the easily deformable portion 44 is deformed, and thus, the amount of distortion of the easily deformable portion 44 increases. In this estimation method, it is deemed that a proportional relationship is established between a total value of the amount of distortion detected by the plurality of (n) sensor members 102 and the torque acting on the first meshing gear 28A. In this case, the estimation unit 104 may detect a torque (T) acting on the first meshing gear 28A by Equation (1).

$$T = k_1 \times (\varepsilon_1 + \varepsilon_2 + \ldots + \varepsilon_n) \ldots (1)$$

Here, $k_1$ represents a coefficient, and $\varepsilon_1$ to $\varepsilon_n$ represent the amount of distortion detected by each of the plurality of sensor members 102.

The coefficient $k_1$ need only be determined using, for example, the amount of distortion detected by the plurality of sensor members 102 when a known torque is applied to the first meshing gear 28A.

(Estimation by Standard Deviation)

As described above, the larger the torque acting on the first meshing gear 28A, the larger the amount of distortion of the easily deformable portion 44. In this estimation method, it is deemed that a proportional relationship is established between a standard deviation of the amount of distortion detected by the plurality of sensor members 102 and the torque acting on the first meshing gear 28A. In this case, the estimation unit 104 may detect a torque (T) acting on the first meshing gear 28A by Equation (2).

$$T = k_2 \sqrt{\frac{1}{n} \sum_{i=1}^{n} (\varepsilon_i - \bar{\varepsilon})^2} \quad \cdots (2)$$

Here, $k_2$ represents a coefficient, and $\varepsilon$ with bar represents an average value of the amount of distortion detected by the plurality of sensor members 102.

The coefficient $k_2$ need only be determined using, for example, the amount of distortion detected by the plurality of sensor members 102 when a known torque is applied to the first meshing gear 28A.

(Estimation by Maximum Value and Minimum Value)

As described above, the larger the torque acting on the first meshing gear 28A, the larger the amount of distortion of the easily deformable portion 44. In this estimation method, it is deemed that a proportional relationship is established between a difference (that is, a range of the amount of distortion) between a maximum value and a minimum value of the amount of distortion detected by the plurality of sensor members 102 and the torque acting on the first meshing gear 28A. In this case, the estimation unit 104 may detect a torque (T) acting on the first meshing gear 28A by Equation (3).

$$T = k_3 \times \{\max(\varepsilon_1, \varepsilon_2, \ldots, \varepsilon_n) - \min(\varepsilon_1, \varepsilon_2, \ldots, \varepsilon_n)\} \ldots$$

$$(3)$$

Here, $k_3$ represents a coefficient, max() represents a function that selects a maximum value in (), and min() represents a function that selects a minimum value in ().

The coefficient $k_3$ need only be determined using, for example, the amount of distortion detected by the plurality of sensor members 102 when a known torque is applied to the first meshing gear 28A.

(Estimation by Machine Learning)

The estimation unit 104 may have a discriminator that has learned a correlation between the detected values of the plurality of sensor members 102 and the torque acting on the first meshing gear 28A. In machine learning of the discriminator, a combination of the torque acting on the first meshing gear 28A and the detected values of the plurality of sensor members 102 when the torque is applied to the first meshing gear 28A may be used as learning data. In this case, the estimation unit 104 may estimate the torque acting on the first meshing gear 28A by using the discriminator. That is, the estimation unit 104 need only acquire the detected values from the plurality of sensor members 102, input the detected values to the discriminator, and obtain an output from the discriminator, that is, an estimated value of the torque acting on the first meshing gear 28A.

Alternatively, the estimation unit 104 may have a discriminator that has learned a correlation between a rotation phase of the wave generator shaft 20 that rotates relative to the first meshing gear 28A, the detected values of the plurality of sensor members 102, and the torque acting on the first meshing gear 28A. In machine learning of the discriminator, a combination of the rotation phase of the wave generator shaft 20, the torque acting on the first meshing gear 28A, and the detected values of the plurality of sensor members 102 when the torque is applied to the first meshing gear 28A may be used as learning data. In this case, the estimation unit 104 may estimate the rotation phase of the wave generator shaft 20 and the torque acting on the first meshing gear 28A by using the discriminator. That is, the estimation unit 104 need only acquire the detected values from the plurality of sensor members 102, input the detected values to the discriminator, and obtain an output from the discriminator, that is, an estimated value of the rotation phase of the wave generator shaft 20 and the torque acting on the first meshing gear 28A.

In any case, the discriminator need only be configured using a machine learning method that is known or is available in the future. The discriminator may be configured using, for example, a deep learning network (DNN), a convolutional neural network (CNN), or a recurrent neural network (RNN).

An existing discriminator may be used as the discriminator, but the existing discriminator may be optimized for another gear device. In this case, it is necessary to perform additional learning, that is, tuning of the discriminator to be used. Therefore, the estimation unit 104 may be able to execute a learning mode in which additional learning of the discriminator is executed. For example, the estimation unit 104 may control a drive source to apply a known torque to the first meshing gear 28A after the plurality of sensor members 102 are attached to the first meshing gear 28A, and may perform additional learning of the discriminator using the detected values of the plurality of sensor members 102 when the torque is applied.

(Estimation by Fitting)

The estimation unit 104 may fit a trigonometric function to the detected values of the plurality of sensor members 102, and estimate the torque based on an amplitude of the trigonometric function obtained by the fitting. For example, the estimation unit 104 may fit Equation (4) to the detected values of the plurality of sensor members 102. The estimation unit 104 need only use a known method, such as a least squares method, for the fitting. The form of Equation (4) may be determined from a graph in which the detected values of the plurality of sensor members 102 when a known torque is applied to the first meshing gear 28A are plotted. According to Equation (4), an amplitude a is estimated as the torque acting on the first meshing gear 28A, a phase b is estimated as the rotation phase of the wave generator shaft 20, and c is estimated as a temperature of the first meshing gear 28A. The estimation unit 104 may estimate the torque and any one of the rotation phase and the temperature.

$$y = a \ (\sin \ (\theta + b))^{2 + c} \ ... \ (4)$$

In the above description, a case where the estimation unit 104 estimates the torque acting on the first meshing gear 28A serving as the detection object has been described. However, the present invention is not limited thereto, and the estimation unit 104 may estimate a torque acting on a member related to the first meshing gear 28A serving as the detection object, for example, the torque acting on the wave generator shaft 20 that rotates relative to the first meshing gear 28A serving as the detection object. That is, the estimation unit 104 may estimate the torque acting on the wave generator shaft 20, which is a member related to the first meshing gear 28A, based on the amount of distortion of the easily deformable portion 44 of the first meshing gear 28A serving as the detection object.

What kind of control is performed based on the torque estimated by the estimation unit 104 is not particularly limited. For example, control of detecting a contact with an obstacle (for example, a person) and stopping the drive source may be performed based on the estimated torque.

Subsequently, an effect of the embodiment will be described. According to the present embodiment, the plurality of sensor members 102 of the sensor device 100 are attached to the first meshing gear 28A serving as the detection object and are connected in parallel. Since the plurality of sensor members 102 are not connected in series but in parallel, the detected values of the plurality of sensor members 102 are output to the estimation unit 104 without being averaged. Therefore, for example, a detected value corresponding to the meshing position, that is, a peak value can be acquired. Therefore, it is possible to more accurately estimate information related to the torque acting on the detection object.

In addition, according to the present embodiment, the estimation unit 104 may have a discriminator that has learned a relationship between the detected value of the sensor member and the torque, and may estimate the torque by using the discriminator. Depending on the performance of the discriminator, the discriminator can accurately estimate the torque acting on the detection object. In addition, the discriminator can also estimate the rotation phase of the rotating member that rotates relative to the detection object.

In addition, according to the present embodiment, the estimation unit 104 may fit the trigonometric function to the detected value of the sensor member, and estimate the torque based on the amplitude of the fitted trigonometric function. In this case, depending on the form of the trigonometric function to be fitted, the torque acting on the detection object can be accurately estimated with a small amount of calculation. In addition, the rotation phase of the rotating member that rotates relative to the detection object can also be estimated.

The present invention has been described above based on the embodiment. The embodiment is merely an example, and it will be understood by those skilled in the art that various modifications can be made for the combinations of the components and processing processes, and such modifications are also within the scope of the invention.

(Modification Example 1)

The detected value of the sensor member 102 may be affected by the temperature. For example, in a case where the sensor member 102 is a distortion gauge, when an environmental temperature rises, the detected value also rises. The estimation unit 104 may perform temperature compensation.

In the detected values of the plurality of sensor members 102 at a certain timing, a highest detected value is considered to be the detected value of the sensor member 102 located on a major axis side of the wave generator 30, which is the detected value of the sensor member 102 corresponding to the meshing position, and a lowest detected value is considered to be the detected value of the sensor member 102 located on a minor axis side of the wave generator 30, which is the detected value of the sensor member 102 corresponding to the non-meshing position. Here, the detected values of the plurality of sensor members 102 may include a value corresponding to the amount of distortion and a fluctuation value due to the environmental temperature at the time of the detection, but since almost no distortion should occur on the minor axis side of the wave generator 30, it can be considered that the lowest detected value which is considered to be the detected value by the sensor member 102 on the minor axis side of the wave generator 30 includes only the fluctuation value due to the environmental temperature at the time of the detection. Therefore, the estimation unit 104 may use a value obtained by subtracting the lowest detected value as the detected value of the sensor member 102, as shown in Equation (5). In this case, the influence of the environmental temperature can be reduced.

$$\varepsilon_i = \varepsilon_i - \min(\varepsilon_1, \varepsilon_2, \ldots, \varepsilon_n) \ldots (5)$$

(Modification Example 2)

In the embodiment and the above-described modification example, the sensor device 100 is applied to the bending meshing type gear device of a tubular type, but a specific example of the bending meshing type gear device is not particularly limited, and may be, for example, a cup type or a silk hat type. In addition, in the case of the bending meshing type gear device, the meshing gears 28A and 28B may be bending gears. The sensor device 100 may be applied to an eccentric oscillation type gear device, a simple planetary gear device, or the like in addition to the bending meshing type gear device. In addition, in the case of the eccentric oscillation type gear device, in addition to a center crank type in which a crankshaft is disposed on an axial center of a meshing gear that meshes with an oscillating gear, a distribution type may be adopted in which the crankshaft is disposed at a position offset from the axial center of the meshing gear. In addition, in various gear devices, a member (that is, a detection object) to which the plurality of sensor members 102 are attached is not particularly limited. That is, the sensor device 100 can be applied to various gear devices, and a component thereof can be used as a detection object.

(Modification Example 3)

In the embodiment and the above-described modification example, a case where the sensor device 100 is applied to the gear device has been described. However, the sensor device 100 can be applied to various mechanical devices other than the gear device. The mechanical device may be a device that involves a rotating operation. For example, the mechanical device may be a motor, a ball screw device, or the like. The detection object on which the plurality of sensor members 102 are disposed may be a member around a member that performs a rotating operation.

(Modification Example 4)

In the embodiment and the above-described modification example, a case where the sensor device 100 estimates the torque acting on the detection object has been described. However, the present invention is not limited thereto, and the sensor device 100 may estimate information relating to a load acting on the detection object instead of the information related to the torque acting on the detection object. The load acting on the detection object need only be estimated based on the detected values of the plurality of sensor members 102 attached to the detection object and wired in parallel and connected to the estimation unit 104 in the same manner as in the case of the torque.

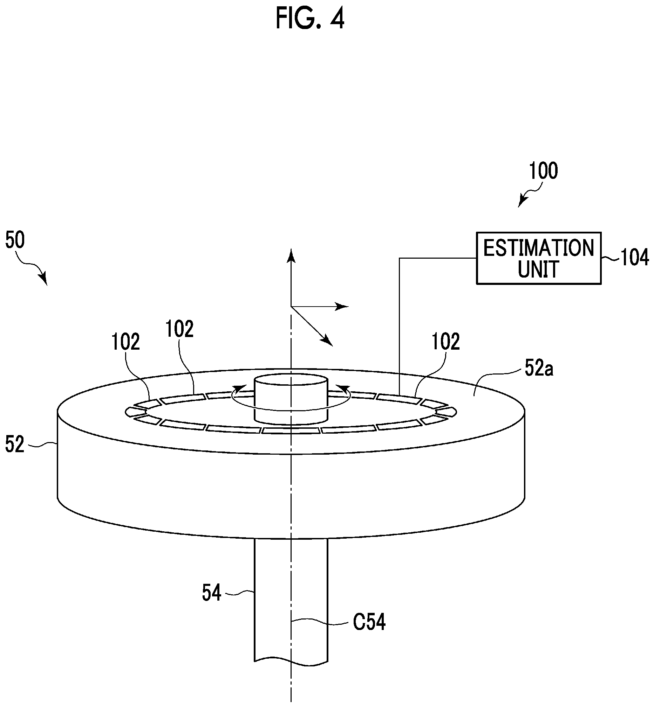

With reference to Fig. 4, description will be made. In this example, the sensor device 100 is applied to a handle device 50. The handle device 50 includes a handle portion 52 having a disk shape and a rotary shaft 54 fixed to the handle portion 52 perpendicularly. The handle device 50 is rotatable about a rotation center line C54 of the rotary shaft 54. In the handle device 50, a load can act in the axial direction, which is a direction along the rotation center line C54 of the rotary shaft 54, and in the radial direction with the rotation center line C54 as a center of a circle.

The plurality of sensor members 102 of the sensor device 100 are disposed in a line in the circumferential direction on a disk surface 52a of the handle portion 52 serving as the detection object. The plurality of sensor members 102 are wired in parallel and connected to the estimation unit 104. When the handle portion 52 is distorted due to a torque around the rotary shaft 54 acting on the handle portion 52 or a load acting on the handle portion 52 in the axial direction or the radial direction, the plurality of sensor members 102 can detect the amount of distortion.

The estimation unit 104 estimates the torque and the load acting on the handle portion 52 serving as the detection object based on the detected values of the plurality of sensor members 102. For example, the estimation unit 104 may have a discriminator that has learned a relationship between the detected values of the plurality of sensor members 102 and the torque and the load acting on the handle portion 52. In learning of the discriminator, a combination of the torque and the load acting on the handle portion 52 and the detected values of the plurality of sensor members 102 when the torque and the load are applied to the handle portion 52 may be used as learning data. The estimation unit 104 need only acquire the detected values from the plurality of sensor members 102, input the detected values to the discriminator, and obtain an output from the discriminator, that is, an estimated value of the torque and the load acting on the handle portion 52.

The above-described embodiment and modification examples are merely examples. The technical ideas that are abstracted from the embodiment and the modification examples should not be construed as limited to the contents of the embodiment and the modification examples. Many design changes such as modifications, additions, and deletions of the components can be made in the contents of the embodiment and the modification examples. In the above-described embodiment, the contents enabling the design changes are emphasized by assigning the notation of the "embodiment". However, the design changes are allowed even when there is no notation in the contents. A hatched cross section in the drawing does not limit a material of a hatched object. Structures referred to in the embodiment and the modification examples naturally include those that can be regarded as the same when manufacturing errors are taken into consideration.

Any combination of the above components is also valid. For example, one modification example may be combined with any description of the embodiment and the other modification examples.

Brief Description of the Reference Symbols

10 gear device
100 sensor device
102 sensor member
104 estimation unit

**Claims**

1. A sensor device (100) that detects information related to a load or a torque acting on a detection object, the sensor device (100) comprising:

   a plurality of sensor members (102) that are attached to the detection object and are connected in parallel; and
   an estimation unit (104) that estimates the information related to the load or the torque acting on the detection object based on detected values of the plurality of sensor members (102).

2. The sensor device (100) according to claim 1,
   wherein a stress distribution of the detection object is not uniform during an operation of a device in which the detection object is incorporated.

3. The sensor device (100) according to claim 1,
   wherein the estimation unit (104) includes a discriminator that has learned a relationship between the detected values of the plurality of sensor members (102) and the load or the torque, and estimates the load or the torque by using the discriminator.

4. The sensor device (100) according to claim 3,
   wherein the discriminator is a discriminator that has learned a relationship between a rotation phase of a rotating member that rotates relative to the detection object, the detected values of the plurality of sensor members (102), and the load or the torque.

5. The sensor device (100) according to claim 3 or 4,
   wherein the estimation unit (104) has a learning mode in which learning of the discriminator is performed by operating a device in which the detection object is incorporated after the plurality of sensor members (102) are attached to the detection object.

6. The sensor device (100) according to claim 1,
   wherein the estimation unit (104) fits a predetermined trigonometric function to the detected values of the plurality of sensor members (102), and estimates the load or the torque based on an amplitude of the fitted trigonometric function.

7. The sensor device (100) according to claim 1,
   wherein the estimation unit (104) estimates at least one of a phase and a temperature of a part for which the information related to the load or the torque is estimated.

# FIG. 1

# FIG. 2

# FIG. 3

# FIG. 4

**EUROPEAN SEARCH REPORT**

Application Number

EP 24 18 0079

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2017/123535 A1 (DEMAS NICKOLAS PETER [US]) 20 July 2017 (2017-07-20) <br> * abstract * <br> * paragraphs [0030], [0031] * <br> * figure 1 * <br> ----- | 1-7 | INV. <br> G01L3/14 <br> G01L1/22 <br> G01L5/1627 |
| X | US 2007/143039 A1 (MOL HENDRIK A [NL]) 21 June 2007 (2007-06-21) <br> * abstract * <br> * paragraph [0060] * <br> * figures 2, 3, 5 * <br> ----- | 1-7 | |
| A | US 2011/239788 A1 (NAGASAKA KENICHIRO [JP] ET AL) 6 October 2011 (2011-10-06) <br> * paragraphs [00356], [00357] * <br> ----- | 6 | |

**TECHNICAL FIELDS SEARCHED (IPC)**

G01L

The present search report has been drawn up for all claims

| Place of search | Date of completion of the search | Examiner |
|---|---|---|
| The Hague | 1 November 2024 | Grewe, Clemens F. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

3

EP 4 481 349 A1

## ANNEX TO THE EUROPEAN SEARCH REPORT
## ON EUROPEAN PATENT APPLICATION NO.

EP 24 18 0079

01-11-2024

| Patent document cited in search report | Publication date | Patent family member(s) | | Publication date |
|---|---|---|---|---|
| WO 2017123535 A1 | 20-07-2017 | EP | 3387367 A1 | 17-10-2018 |
| | | US | 2017197032 A1 | 13-07-2017 |
| | | WO | 2017123535 A1 | 20-07-2017 |
| US 2007143039 A1 | 21-06-2007 | AT | E356346 T1 | 15-03-2007 |
| | | BR | PI0414710 A | 14-11-2006 |
| | | CN | 1856699 A | 01-11-2006 |
| | | DE | 602004005227 T2 | 20-12-2007 |
| | | EP | 1668332 A1 | 14-06-2006 |
| | | ES | 2281012 T3 | 16-09-2007 |
| | | KR | 20060066117 A | 15-06-2006 |
| | | NL | 1024372 C2 | 29-03-2005 |
| | | US | 2007143039 A1 | 21-06-2007 |
| | | WO | 2005040745 A1 | 06-05-2005 |
| US 2011239788 A1 | 06-10-2011 | CN | 102235926 A | 09-11-2011 |
| | | JP | 2011209099 A | 20-10-2011 |
| | | US | 2011239788 A1 | 06-10-2011 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2020201046 A